# EUROPEAN PATENT APPLICATION

(11) **EP 2 639 755 A1**
(43) Date of publication of application: **18.09.2013**
(21) Application number: 13155193.9
(22) Date of filing: 14.02.2013
(51) Int. Cl.: G06Q 10/10, G06Q 50/20

(54) **Electronic-book system and method for sharing additional page information thereof**

(30) Priority: 12.03.2012 KR 20120025103
(71) Applicant: Samsung Electronics Co., Ltd, Gyeonggi-do 443-742 (KR)
(72) Inventor: Heo, Dong-Kyu, Gyeonggi-do (KR); Kim, Yeong-Min, Gyeonggi-do (KR)
(74) Representative: Jenkins, Richard Gavin

(57) **Abstract**

An e-book system for sharing information between e-book readers and an operating method thereof are provided. The e-book system includes a first e-book reader and a second e-book reader for synchronizing and reproducing the same pages of the same e-book contents in real time, wherein the first e-book reader displays additional information received from a user on a current page of the e-book contents and transmits the additional information to the second e-book reader and wherein the second e-book reader displays the additional information received from the first e-book reader on a current page of the e-book contents.

## Description

### BACKGROUND OF THE INVENTION

### 1. Field of the Invention

The present invention relates to an electronic-book (e-book) system and an operating method thereof. More particularly, the present invention relates to an e-book system for sharing information between e-book readers and an operating method thereof.

### 2. Description of the Related Art

"E-books" is a generic term combining the concepts of digital books so that users may read, see, and listen to their contents using computers or portable terminals through a wire and wireless information communication network after contents of writings which was published or will be published as books are recorded in an electronic recording/storing medium using digital data items. Such e-books are provided with a variety of content types according to particular fields of study.

The e-books typically have lower production costs and have a lower sale price than that of paper books and may save more time than the paper books through on-line purchase. The costs of manufacturing a paper book is considerably more expensive, considering that publishers have to make an educated guess as to how many paper books should be printed, and then offer them at discounts or even absorb a loss if the sales do not correspond to the estimated forecasts. Each of the users may easily read e-books anytime or anywhere while he or she stores the e-books in an e-book reader and carries the e-book reader.

Recently, the e-books are being used in fields of learning as textbooks, and no longer limited to leisure reading. For example, the e-book reader provides functions so that the user may learn the e-books by himself or herself, such as a memo function and an underlining function that assist with the learning process.

However, information written by the function is useful in only a user's own e-book terminal. The information is not shared with other e-book terminals. This results in dissatisfaction to users who cannot benefit from someone's work, having to recreate the function in their own ebook(s).

### SUMMARY OF THE INVENTION

The present invention has been made to solve at least in part some of the above-mentioned problems and/or disadvantages and to provide at least the advantages described below. Accordingly, an exemplary aspect of the present invention is to provide an e-book system for sharing information added to the same e-book contents between e-book readers and an operating method thereof.

Another exemplary aspect of the present invention is to provide an e-book system for synchronizing reproduction pictures of the same e-book contents between e-book readers and an operating method thereof.

Yet another exemplary aspect of the present invention is to provide an e-book system for remotely guiding study for e-book contents read by a student..

In accordance with another exemplary aspect of the present invention, an e-book system is provided. The e-book system preferably include a first e-book reader and a second e-book reader for synchronizing and reproducing the same pages of the same e-book contents in real time, wherein the first e-book reader displays additional information received from a user on a current page of the e-book contents and transmits the additional information to the second e-book reader, and wherein the second e-book reader displays the additional information received from the first e-book reader on a current page of the e-book contents.

In accordance with another exemplary aspect of the present invention, an operating method of an e-book system is provided. The operating method preferably includes synchronizing and reproducing the same pages of the same e-book contents in real time at a first e-book reader and a second e-book reader and displaying additional information received from a user on a current page of the e-book contents and transmitting the additional information to the second e-book reader at the first e-book reader, and displaying the additional information received from the first e-book reader on a current page of the e-book contents at the second e-book reader.

### BRIEF DESCRIPTION OF THE DRAWINGS

The above and other exemplary aspects, features and advantages of certain exemplary embodiments of the present invention will become more apparent from the following detailed description taken in conjunction with the accompanying drawings, in which:
FIG. 1 is a block diagram illustrating configuration of an e-book reader according to one exemplary embodiment of the present invention;
FIG. 2 is a signal sequence diagram of an e-book system according to one exemplary embodiment of the present invention; and
FIGs. 3 to 7 are interface pictures of an e-book system according to one exemplary embodiment of the present invention.

### DETAILED DESCRIPTION

Exemplary embodiments of the present invention will now be described herein below with reference to the accompanying drawings. In the following description, well-known functions or constructions may not be described in detail when their inclusion would obscure appreciation of the subject matter of the present invention with unnecessary detail of such well-known functions and constructions.

Hereinafter, an e-book system for sharing information added to the same e-book contents between e-book readers and an operating method according to an exemplary embodiment of the present invention will be described in detail. Hereinafter, an e-book system for synchronizing reproduction pictures of the same e-book contents between e-book readers according to one embodiment of the present invention will be described in detail.

The terms "at least one" and "one or more" are not limited to a single quantity of a recited element.

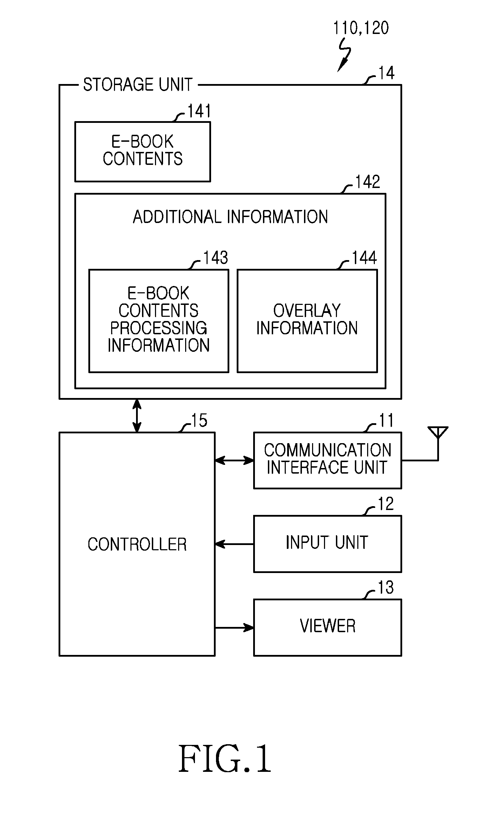

FIG. 1 is a block diagram illustrating an exemplary configuration of an e-book system according to an exemplary embodiment of the present invention.

In the present invention, the e-book reader may comprise a cellular phone, a Personal Communication Service (PCS) phone, a complex wireless terminal, an International Mobile Telecommunication (IMT) 2000 terminal, a 4Generation (G) wideband system terminal, etc. or other type of mobile terminals with wireless transmission capability, just to name a few non-limiting possibilities.

Referring now to FIG. 1, each of e-book terminals 110 and 120 preferably includes a communication interface unit 11, an input unit 12, a viewer 13, a storage unit 14, and a controller 15.

The communication interface unit 11 has a configuration capable of performing data communication between e-book readers. That configuration includes hardware and may include machine executable code loaded into hardware such as a processor or microprocessor, and executed to provide the functions shown and described herein. Other components shown in FIG. 1 include their own hardware which may include microprocessor(s) or processor(s) for each of the different elements.

The input unit 12 receives input of a user and outputs the received input to the controller 15, and includes hardware such as a touchscreen, keypad, microphone if voice-activated, sensors, etc.

The viewer 13 has a configuration for reproducing e-book contents. The view includes a display screen, which may be a touchscreen, which may be comprised of LEDs, OLEDs, or other types of thin film technology screens, in order to display an output under the control of the controller 15. The viewer 13 may include an interface and a video processor configured for operation under the control of the controller.

The storage unit 14, which comprises a non-transitory machine readable medium, includes e-book contents 141 stored therein. The e-book contents 141 include components thereof, that is, multimedia contents such as texts, symbols, images, and moving pictures, and data items for defining a layout of them. For example, the data items for defining the layout of the e-book contents include machine executable instructions regarding a text size, a text color, a line space, a file loading position, etc. The e-book contents 141 may be ePUB (electronic PUBlication) of an extensible Markup Language (XML) format.

The controller 15, which includes hardware such as a processor or microprocessor configured for operation, parses the e-book contents 141 and detects the data items for defining the layout. The controller 15 loads the data items for defining the layout and the multimedia contents related to the data items, calculates pages, and objectifies the loaded information through the viewer 13.

The user may input additional information 142 to the e-book contents 141 reproduced on the viewer 13 through the input unit 12. The controller 15 controls the storage of the additional information 142 in the storage unit 14. The additional information 142 includes e-book contents processing information 143 regarding that will typically include a format and a style, and overlay information 144 to be displayed along with other content to augment the ebook information. The e-book reader 110 transmits the additional information 142 to the counterpart e-book reader 120. The counterpart e-book reader 120 stores the additional information 142.

The e-book contents processing information 143 is applied to process the e-book contents 141 by a processor or microprocessor of the controller. The controller 15 processes the e-book contents 141 by applying the e-book contents processing information 143 and reproduces the processed e-book contents through the viewer 13. For example, the controller 15 amalgamates the data items for defining the layout of the e-book contents 141 with the e-book contents processing information 143, loads data items for defining a new layout thereof, and objectifies the loaded information through the viewer 13. The e-book contents processing information 143 may define a layout of contents that may include but is not limited to a font size, a font, a font color, a line space, a memo, highlights, an underline, and multimedia. In general, the controller 15 calculates pages in a process of loading the data items for defining the layout of the e-book contents 141 and reproducing the loaded data through the viewer 13. Particularly, when the controller 15 processes the e-book contents 141 by applying the e-book contents processing information 143 and reproduces the processed e-book contents, the controller 15 either calculates or does not calculate pages of the processed e-book contents again according to a style of the e-book contents processing information 143.

For example, if the e-book contents processing information 143 is not related to a range of a page such as an underline and a font color, the controller 15 does not calculate the pages of the processed e-book contents again.

On the other hand, if the e-book contents processing information 143 is related to a range of a page such as a font size and a line space, the controller 15 calculates the pages of the processed e-book contents again.

The overlay information 144 indicates information overlaid and displayed on a current page of the e-book contents 141. The overlay information 144 is not applied to process the e-book contents 141. The controller 15 matches the overlay information 144 to the current page of the e-book contents 141 and stores the matched information. When the current page is changed to a previous or next page, the controller 15 does not display the overlay information 144. When the previous or next page is changed to the current page again, the controller 15 displays the overlay information 144 on the current page of the e-book contents 141 again. The overlay information may include user comments, highlighting, links, etc., that are related to a specific display of a current page.

One of the e-book readers (110 and 120) reproduces the e-book contents 141 by applying the additional information 142 received from the user and transmits the additional information 142 to another counterpart e-book reader. The counterpart e-book reader receives the additional information 142 and reproduces the same e-book contents by applying the received additional information. In conclusion, the two e-book readers 110 and 120 synchronize reproduction pictures of the e-book contents by synchronizing the additional information in real time and applying the synchronized additional information to the same e-book contents. The e-book readers synchronize and reproduce the same pages of the same e-book contents and display the additional information 142 on the current page of the e-book contents. One advantage, particularly for example in the case of textbooks, is that if a first user makes certain highlights, comments or sketches as additional information, then the counterpart e-book reader receives this additional information along with the e-book contents.

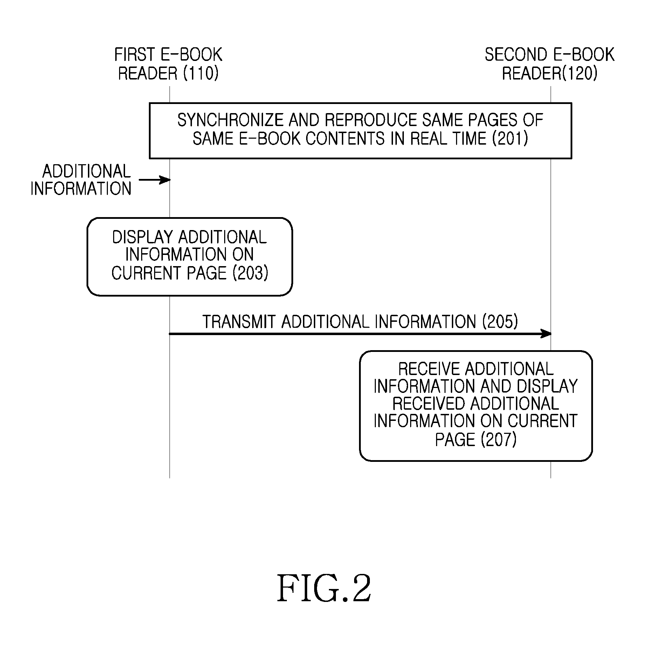

FIG. 2 is a signal sequence diagram of an e-book system according to an exemplary embodiment of the present invention.

A first e-book reader 110 and a second e-book reader 120 are communicatively coupled to each other using a wireless protocol such as Wireless-Fidelity (Wi-Fi) direct communication, Bluetooth communication, Near Field Communication (NFC), and cellular communication, just to name some possible examples of operation.

Referring now to FIG. 2, at step 201, the first e-book reader 110 and the second e-book reader 120 synchronize the same pages of the same e-book contents and reproduce the synchronized pages in real time, respectively. For example, the first e-book reader 110 transmits current page information of the e-book contents to the second e-book terminal 120. The second e-book reader 120 receives the current page information from the first e-book reader 110 and reproduces a page according to the received current page information.

At step 203, the first e-book reader 110 receives additional information from a user and displays the received additional information on a current page of the e-book contents.

At step 205, the first e-book reader 110 transmits the additional information to the second e-book reader 120. The additional information may have been previously created by a user of the first e-book reader, or the information could be added while the first and second e-book readers are synchronized. In addition, it is possible that the first e-book reader received the additional information from yet another e-book reader prior to synchronizing with the second e-book reader at step 201. In this way one the second e-book reader could view the additional information for a current page made by different users.

With continued reference to FIG. 2, at step 207, the second e-book reader 120 receives the additional information from the first e-book reader and displays the received additional information on a current page of the e-book contents.

In conclusion, the first e-book reader 110 and the second e-book reader 120 synchronize reproduction pictures of the e-book contents by reproducing the same pages of the same e-book contents and sharing the same additional information in real time.

While the above example is between a first e-book reader and a second e-book reader, the present invention is not limited thereto. It is within the spirit and scope of the claimed invention that the additional information could be received from a server, website, etc.,

If the additional information 142 comprises an e-book contents processing information 143, both the first e-book reader 110 and the second e-book reader 120 display the additional information on the current page of the e-book contents, through a process of processing the e-book contents by applying the additional information and reproducing the processed e-book contents. More particularly, when the first e-book reader 110 and the second e-book reader 120 process the e-book contents by applying the additional information and reproduce the processed e-book contents, the e-book readers may calculate or may not calculate the pages of the processed e-book contents according to a style of the additional information, at least for reasons as previously discussed herein above.

In addition, when the additional information is overlay information, the first e-book reader 110 and the second e-book reader 120 overlay and display the additional information on the current page of the e-book contents. As described above, the first e-book reader 110 and the second e-book reader 120 match the overlay information to a page of the e-book contents and store the matched information. The first e-book reader 110 and the second e-book reader 120 verify whether overlay information matched to the current page of the e-book contents is stored. If the overlay information matched to the current page thereof is stored, the first e-book reader 110 and the second e-book reader 120 load the overlay information and overlay and display the loaded overlay information on the current page of the e-book contents.

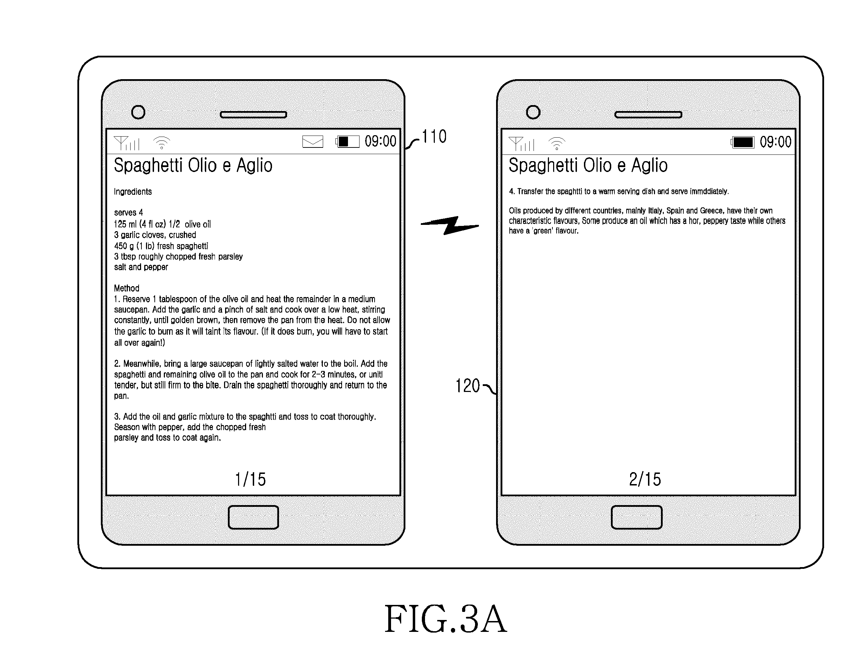

FIGs. 3A to 7B are interface screen shots of an e-book system according to an exemplary embodiment of the present invention.

A first e-book reader 110 and a second e-book reader 120 of the e-book system synchronize the same pages of the same e-book contents in real time.

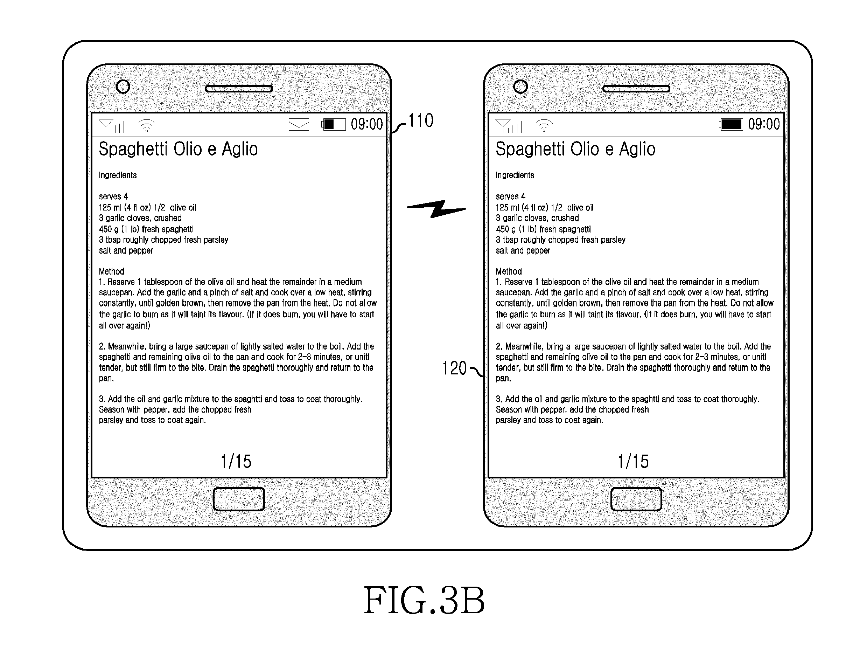

Referring now to FIGs. 3A and 3B, if an operation according to an exemplary embodiment of the present invention is executed while the first e-book reader 110 and the second e-book reader 120 reproduce different pages of the same e-book for display by the viewer, the first e-book reader 110 transmits current page information to the second e-book reader 120. The second e-book reader 120 receives the current page information from the first e-book reader 110, changes a current page to a page according to the received current page information, and reproduces the changed page. Such a change may be considered a form of synchronizing and reproducing a same page.

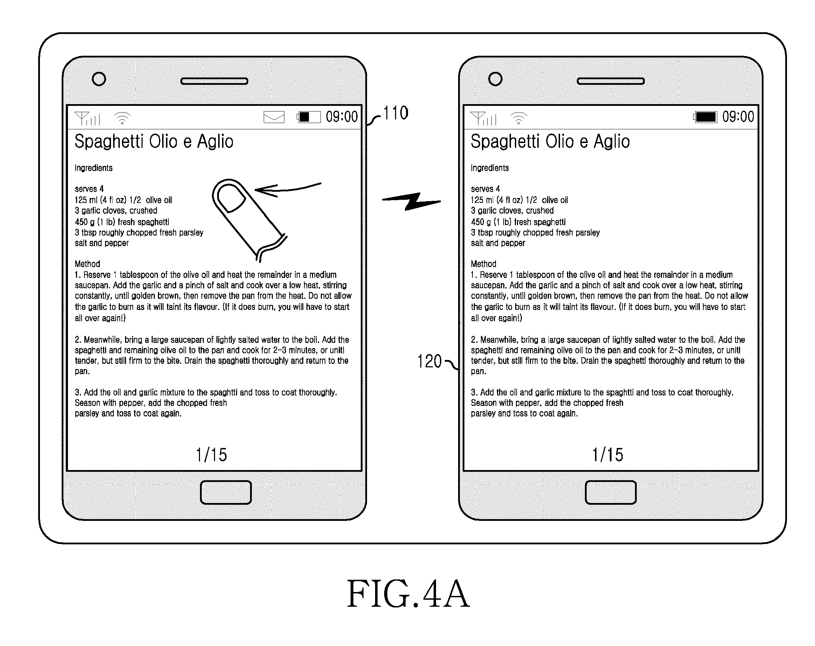

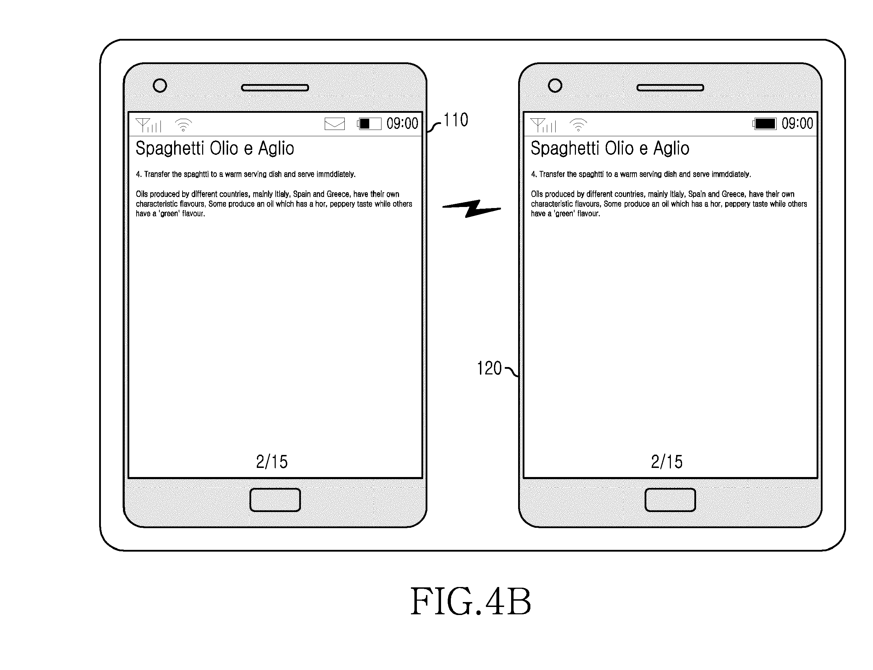

Referring now to FIGs. 4A and 4B, when a user generates a touch flicking event through a touch screen of the first e-book reader 110, the first e-book reader 110 changes a current page to a previous or next page of e-book contents and reproduces the changed page. The first e-book reader 110 transmits the changed page information to the second e-book reader 120. The second e-book reader 120 receives the changed page information, changes a current page to a previous or next page according to the changed page information, and reproduces the changed page, like the above-described operation of the first e-book reader 110.

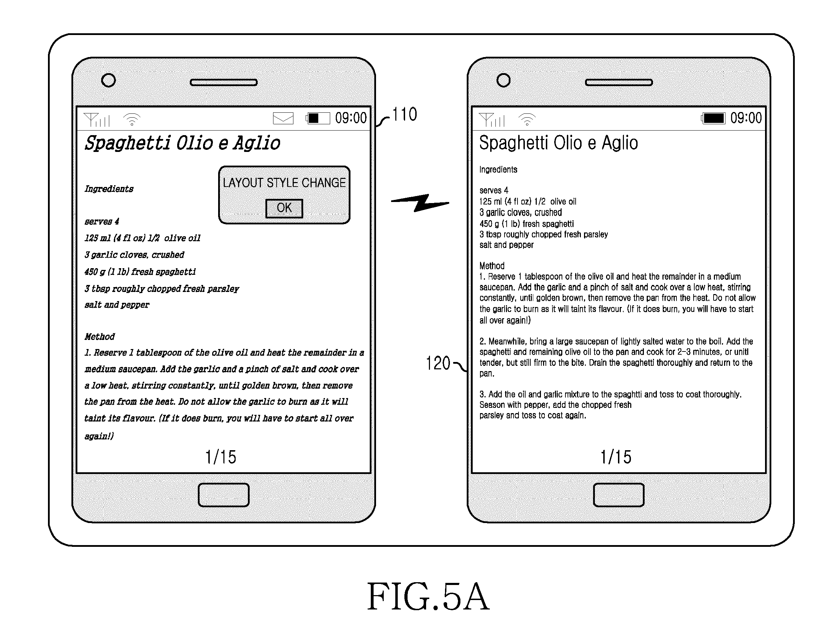

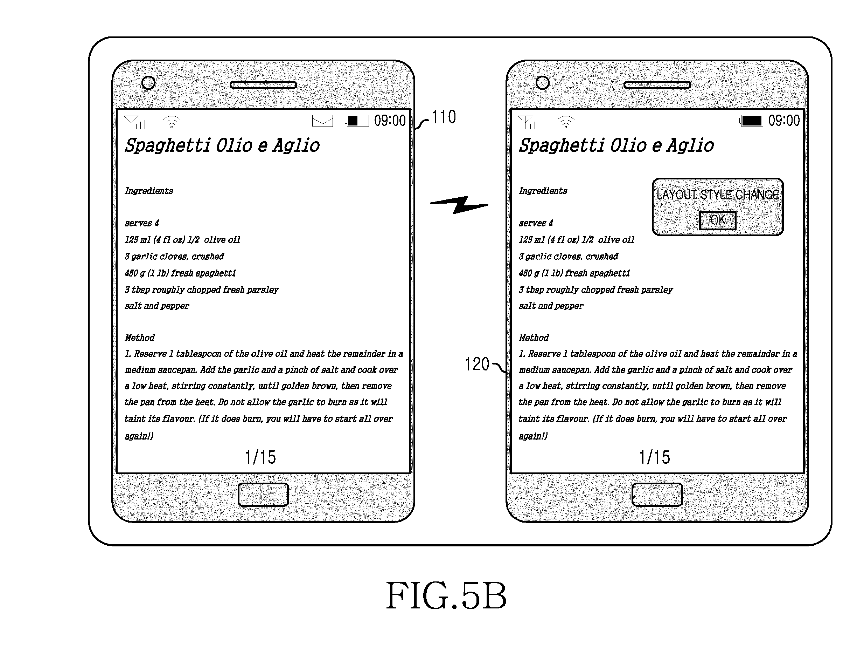

Referring now to FIGs. 5A and 5B, when the first e-book reader 110 receives layout style information of e-book contents from the user, it processes the e-book contents by applying the layout style information, reproduces the processed e-book contents, and transmits the layout style information to the second e-book reader 120. The second e-book reader 120 receives the layout style information from the first e-book reader 110, processes e-book contents by applying the received layout style information, and reproduces the processed e-book contents. Particularly, as shown in FIG. 5, when it is determined that the layout style information requires a recalculation of pages, the first e-book reader 110 and the second e-book reader 120 calculate pages of the processed e-book contents again.

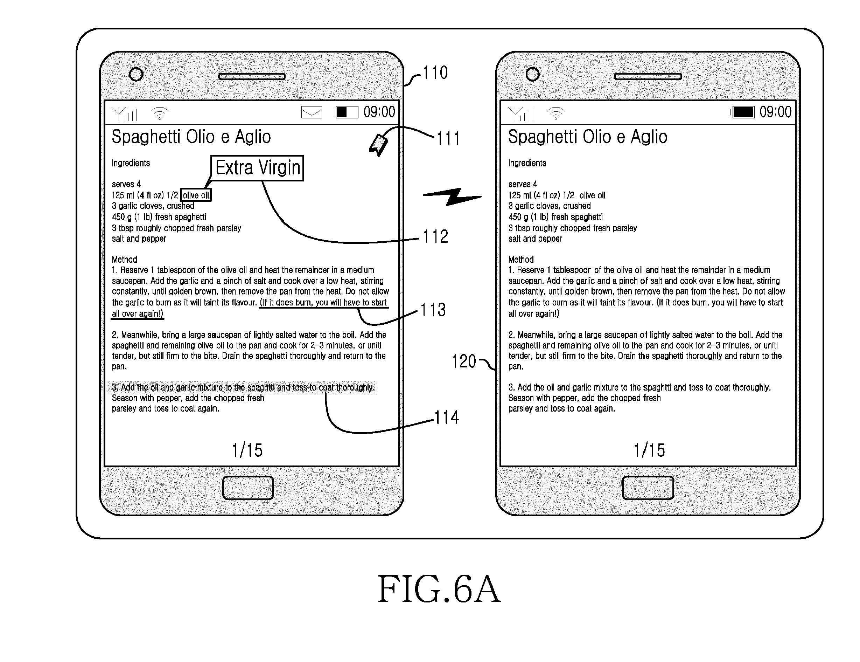

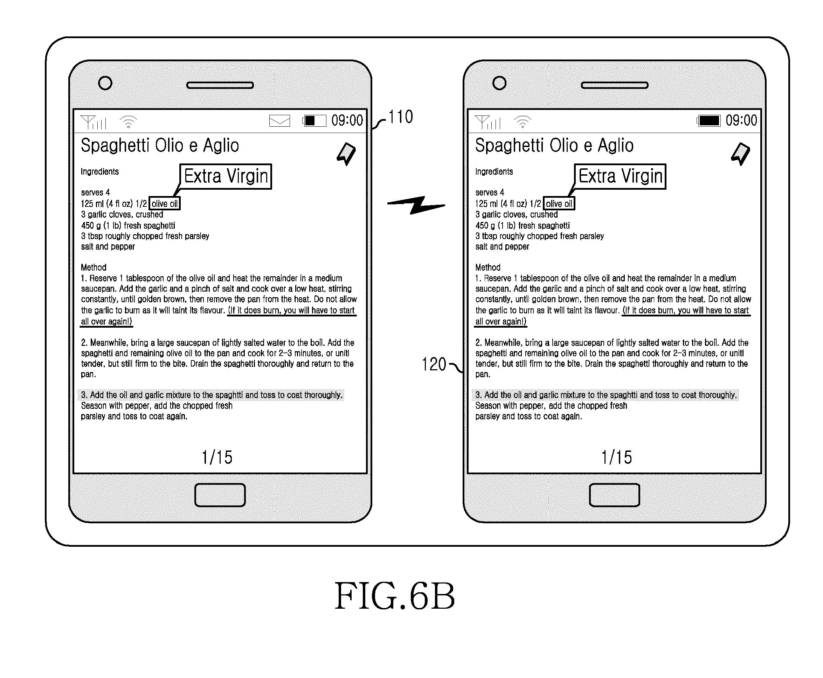

Referring now to FIG. 6A and 6B, when the first e-book reader 110 receives at least one or more additional information items among a bookmark 111, a text memo 112, an underline 113, and highlights 114 from the user, the controller of the first e-book reader processes e-book contents by applying the additional information items and reproduces the processed e-book contents. The first e-book reader 110 transmits the additional information items to the second e-book reader 120. The second e-book reader 120 receives the additional information items from the first e-book reader 110, processes e-book contents by applying the received additional information items, and reproduces the processed e-book contents. The additional information items including the bookmark 111, the text memo 112, the underline 113, and the highlights 114 do not require recalculation of pages. The first e-book reader 110 and the second e-book reader 120 do not calculate pages of the processed e-book contents again.

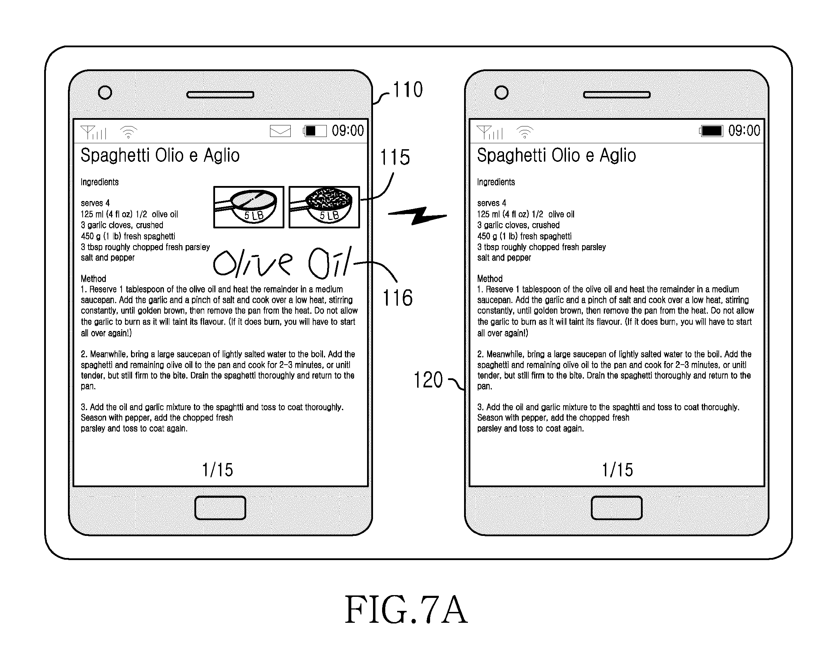

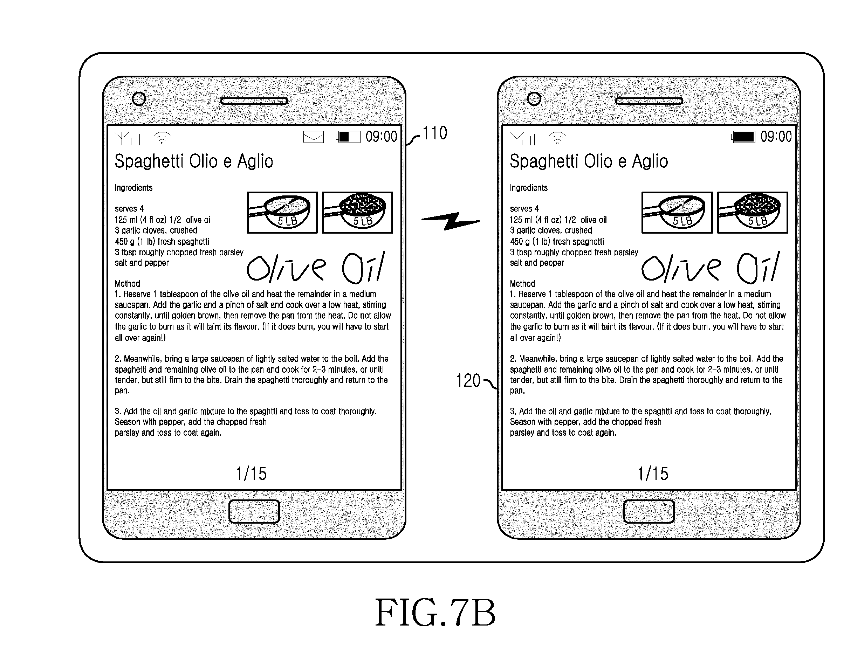

Referring now to FIG. 7A and 7B, in the e-book system, when the first e-book reader 110 receives overlay information items such as an image 115 and a drawing memo 116 from the user, the controller of the first e-book reader overlays and displays the overlay information items on a current page of e-book contents, and transmits the overlay information items to the second e-book reader 120. The second e-book reader 120 receives the overlay information items, and overlays and displays the received overlay information items on a current page of e-book contents.

The e-book system according to an exemplary embodiment of the present invention may be applied to one-way communication by transmitting the additional information from the first e-book reader 110 to the second e-book reader 120, or may be applied to two-way communication by exchanging the additional information with each other between the first e-book reader 110 and the second e-book reader 120. It is even with in the spirit and scope of the claimed invention that the additional information can be multicast or broadcast, for example, in a classroom setting where a professor may add additional information to his/her copy of contents on the e-book that is then provided to all the students in a classroom, or attendees at a conference, etc.

Also, the e-book system according to one embodiment of the present invention is applied to direct communication between the first e-book reader 110 and the second e-book reader 120, or further includes a separate server, base station, or even an Access Point which connects between the first e-book reader 110 and the second e-book reader 120.

In addition, an e-book system according to one embodiment of the present invention may be useful in a learning field and an operating method thereof. For example, the e-book system may share information between learners for e-book contents and may remotely guide the e-book contents and the operating method thereof.

In conclusion, the e-book system and the operating method thereof according to the exemplary embodiment of the present invention may share information added to the same e-book contents in real time between e-book readers and the operating method thereof.

While the present invention has been particularly shown and described with reference to exemplary embodiments thereof, it will be understood by those skilled in the art that various changes in form and details may be made therein without departing from the spirit and scope of the present invention as defined by the appended claims.

It will be appreciated that exemplary embodiments of the present invention according to the claims and description in the specification can be realized in the form of hardware, software or a combination of hardware and software within the limits of 35 U.S.C. §101, and the invention does not constitute software per se. Software is loaded into hardware such as a processor or microprocessor to configure the processor for functionality as described both in the specification and drawings such as FIG. 2 or shown in other drawings.

Any such software may be stored in a computer readable storage medium. The computer readable storage medium stores one or more programs (software modules comprising machine executable code), the one or more programs comprising instructions, which when executed by one or more processors in an electronic device, cause the electronic device to perform a method of the present invention.

The above-described methods according to the present invention can be implemented in hardware, firmware or as software or computer code that is stored on a non-transitory machine readable medium such as a CD ROM, a RAM, DVD, a floppy disk, a hard disk, or a magneto-optical disk or computer code downloaded over a network originally stored on a remote recording medium or a non-transitory machine readable medium and stored on a local non-transitory recording medium, so that the methods described herein can be loaded into hardware such as a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. In addition, an artisan understands and appreciates that a "processor" or "microprocessor" constitute hardware in the claimed invention. Under the broadest reasonable interpretation, the appended claims constitute statutory subject matter in compliance with 35 U.S.C. §101.

The terms "unit" or "module" as used herein is to be understood as constituting hardware such as a processor or microprocessor configured for a certain desired functionality in accordance with statutory subject matter under 35 U.S.C. §101 and does not constitute software per se.

Any such software may be stored in the form of volatile or non-volatile storage such as, for example, a storage device like a ROM, whether erasable or rewritable or not, or in the form of memory such as, for example, RAM, memory chips, device or integrated circuits or on an optically or magnetically readable medium such as, for example, a CD, DVD, magnetic disk or magnetic tape or the like. It will be appreciated that the storage devices and storage media are embodiments of machine-readable non-transitory storage that are suitable for storing a program or programs comprising instructions that, when executed, implement embodiments of the present invention.

## Claims

1. A method for sharing information added to at least one same page of e-book contents by an e-book reader, the method comprising:
synchronizing and reproducing the at least one same page of the same e-book contents by a first e-book reader in real time with a peer e-book reader via wireless communication, wherein the at least one same page comprises a current page being displayed by the first e-book reader;
displaying by the first e-book reader additional information input to or received by with regard to the current page of the e-book contents; and
transmitting the additional information to the peer e-book reader for display by the peer e-book reader.

2. The method of claim 1, wherein the synchronization and reproduction of the at least one same page of the same e-book contents in real time with the peer e-book reader comprises the first e-book reader transmitting the current page information of the e-book contents to the peer e-book reader.

3. The method of claim 1, wherein the display of the additional information input to or received by the first e-book reader on the current page of the e-book contents comprises processing the e-book contents by applying the additional information and reproducing the processed e-book contents.

4. The method of claim 3, wherein the display of the additional information input to or received by the first e-book reader regarding the current page of the e-book contents includes one of calculating or not calculating pages of the e-book contents again according to a style of the additional information when processing the e-book contents by applying the additional information and reproducing the processed e-book contents.

5. The method of claim 1, wherein the display of the additional information input on the current page of the e-book contents comprises overlaying and displaying the additional information on the current pages of the e-book contents.

6. The method of claim 1, further comprising matching the additional information to the current pages of the e-book contents and storing the matched information.

7. The method of claim 7, wherein the additional information includes at least one or more of a font size, a font, a font color, a line space, a text memory, a drawing memo, highlights, an underline, and multimedia.

8. A method for sharing information added to at least one same page of e-book contents by an e-book reader, the method comprising:
synchronizing and reproducing at least one the same pages of a same e-book contents in real time with a peer e-book reader;
receiving additional information from the peer e-book reader; and
displaying the received additional information on a current page of the e-book contents.

9. The method of claim 8, wherein the synchronization and reproduction of the at least one same page of the same e-book contents in real time with the peer e-book reader comprises receiving the current page information from the peer reader and reproducing a page according to the received current page information.

10. The method of claim 8, wherein the display of the additional information received from the peer e-book reader on the current page of the e-book contents comprises processing the e-book contents by applying the additional information and reproducing the processed e-book contents.

11. The method of claim 10, wherein the display of the additional information received from the peer e-book reader on the current page of the e-book contents comprises either one of calculating or not calculating pages of the e-book contents again according to a style of the additional information, when processing the e-book contents by applying the additional information and reproduce the processed e-book contents.

12. The method of claim 8, wherein the display of the additional information received from the peer e-book reader on the current page of the e-book contents comprises overlaying and displaying the additional information on the current pages of the e-book contents.

13. The method of claim 10, further comprising matching by a controller the additional information to the current pages of the e-book contents and storing the matched information in a storage unit.

14. The method of claim 10, wherein the e-book contents comprise e-book contents of an ePUB format

15. An e-book reader comprising:
a communication interface unit that wirelessly communicates with at least one peer e-book reader;
a viewer configured to for reproducing the e-book contents;
a storage unit that stores the e-book contents and the additional information, and
a controller that is configured to control loading the e-book contents and the additional information, objectifying the loaded information through the viewer, and receiving the additional information from the peer e-book reader through the communication interface unit,
wherein the controller synchronizes and reproduces at least one same pages of the same e-book contents in real time with the peer e-book reader, receives the additional information about the at least one same page from the peer e-book reader through the communication interface unit, and displays the received additional information on a current page of the same e-book contents through the viewer.
